# EUROPEAN PATENT APPLICATION

(11) **EP 1 998 279 A1**
(43) Date of publication of application: **03.12.2008**
(21) Application number: 07010623.2
(22) Date of filing: 29.05.2007
(51) Int. Cl.: G06Q 20/00

(54) **Secure payment transaction in multi-host environment**

(71) Applicant: First Data Corporation, Greenwood Village, CO 80111 (US)
(72) Inventor: Kubo Takayuki, 71083 Herrenberg (DE); Wallner Markus, 71720 Oberstenfeld (DE); Albrecht Norbert, 16341 Panketal (DE)
(74) Representative: Katérle, Axel

(57) **Abstract**

A Point-of-Sale (POS) terminal for performing electronic payment transactions and a method for such is described. The POS terminal comprises multiple cryptographic host keys for establishing secure connections with multiple hosts respectively. The POS terminal is capable of determining a payment software application, selecting the cryptographic host key associated with the determined payment software application, and establishing, by means of the selected cryptographic host key, a secure connection with the host associated with the determined payment software application. Consequently, the POS terminal is capable of establishing different secure connections with different hosts so as to process electronic payments transactions according to different payments software applications in a secure manner.

## Description

### Field of the Invention

The invention generally relates to techniques for the secure transfer of financial data. In particular, the invention relates to techniques for securely performing electronic payment transactions originated from Point-of-Sale (POS) terminals.

### Background of the Invention

As a convenient means for processing electronic payment transactions, Point-of-Sale, or Point-of-Service, (POS) terminals are widely used by businesses of all kinds and sizes, especially merchants in the retail environment. Typically, to conduct a payment transaction electronically, a user, usually a merchant or a cardholder, swipes or inserts a payment card through the card-reading slot of the POS terminal and/or key-in additional payment-related information, sometimes accompanied by the cardholder's entering a personal identification number (PIN) code. According to the above input information, the POS terminal generates a payment transaction message and automatically submits it to a payment service provider via a telecommunication network. Technically, the POS terminal communicates with a host, or a server, of the payment service provider. The host is a data processing device that centrally processes payment transactions of a certain type. Common payment types are, and not limited to, credit card-based, debit card-based, and check-based transactions. Upon receiving the payment transaction message, the host carries out a series of activities according to a certain payment software application. The activities may include extracting the data contained in the message, authenticating the card used, checking the customer's financial credibility, and so on. Finally, the host returns a response message to the POS terminal indicating whether an authorization for the transaction has been approved or not. If this response is positive, the payment will be successfully processed.

Conventionally, since a merchant uses a fixed payment service provider, that is, a fixed host, the POS terminal of the merchant only needs to be configured to be able to communicate with that host. Different POS terminals, of course, may communicate with different hosts.

As can be easily perceived, security measures are necessary in the process of conducting electronic payment transactions between the POS terminal and the host.

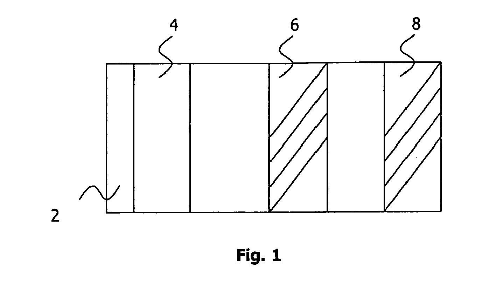

One security measure known in the art is the encryption of the payment transaction message by the POS terminal: After an electronic payment transaction is initiated on the POS terminal, the POS terminal generates a payment transaction message in a certain format, before sending the message off to the telecommunication network. One internationally used format for this purpose is the ISO8583 standard. Recommended by the International Organization for Standardization (ISO) for systems that exchange electronic transactions made by card holders using payment cards, ISO8583 is a data format that defines the data contents of electronic transaction messages at the application level. The basic structure of a payment transaction message formatted according to the ISO8583 standard is shown in Fig. 1. The payment transaction message 2 contains numerous fields for storing information related to the payment transaction. For example, field 4 stores the card number of the payment card; field 6 stores the PIN code corresponding to the card. Field 8 is a checksum, which is a standard security measure for allowing the receiver (i.e. the intended host) of the message to detect whether the content of the message has been changed and/or tampered with along the transmission route. In many countries, certain organizations (e.g. GICC in Germany) that govern or regulate the operations of banking institutions stipulate that certain fields of the ISO8583 message must be encrypted. For example, in the generated payment transaction message 2 of Fig. 1, the PIN code, which is highly personal sensitive information, is encrypted, as figuratively indicated by slash lines in Field 6. However, to facilitate fast processing of payment transaction messages, some fields of the ISO8583 message may be left unencrypted. For example, as shown in Fig. 1, the card number, corresponding to Field 4, is not encrypted, i.e. it remains as clear text. Understandably, this partial encryption of the payment transaction message causes a security concern, because the message is to be transmitted via a telecommunication network thus susceptible to eavesdroppers.

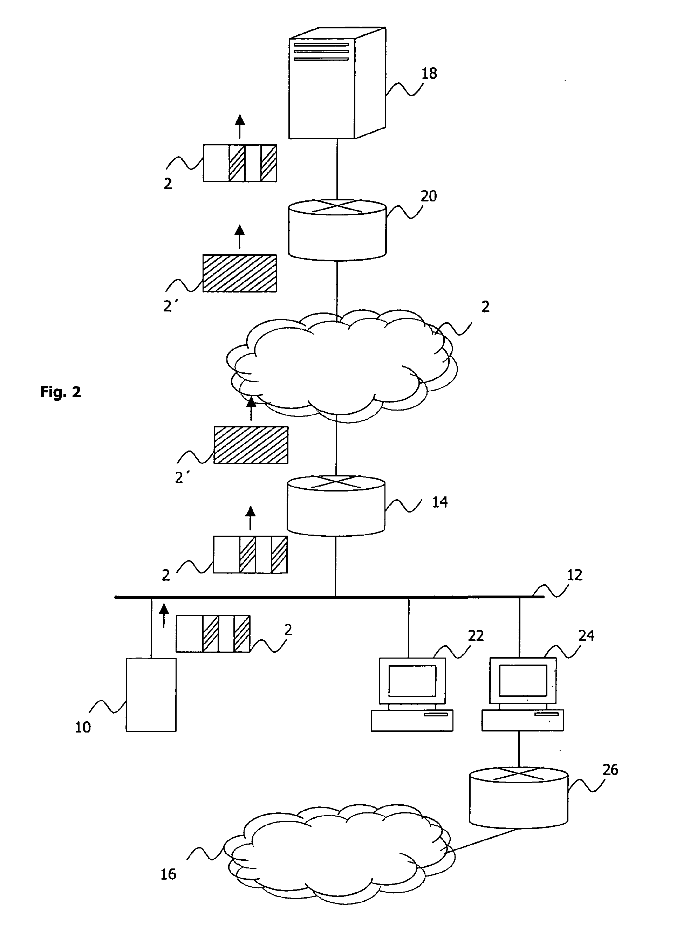

The telecommunication network used in electronic payment transactions may be any known public or private communication network. A public network may be a public switched telecommunication (PSTN) network, an Integrated Services Digital Network (ISDN) network, a wireless public telecommunications network, Internet, and so forth. A private network may be a local area networks (LAN), for example. In recent years, Internet communication for electronic payment transactions has become increasingly popular. A typical communication scenario using the Internet is shown in Fig. 2.

As illustrated by Fig. 2, a POS terminal 10 is connected to a local area network (LAN) 12 of a user, e.g. a merchant. The LAN 12 is connected to a router 14 for providing the POS terminal with an access to the Internet 16. Likewise, a host 18 of a payment service provider is also connected with an Internet-access-providing router 20. To ensure that the communication between the POS terminal 10 and the host 18 through the Internet 16 is a secure one - at least when the POS terminal and the host are actively transmitting data with each other - the two routers 14 and 20 can be configured to establish a secure connection there-between. For instance, the routers 14 and 20 can form a Virtual Private Network, a secure tunnel, through the Internet 16. This security measure is figuratively shown in the Fig. 2 by a fully encrypted payment message 2'. More specifically, in the case of an ISO8583 payment transaction message, the message 2 leaves the POS terminal as partially encrypted, but becomes, effectively, fully encrypted after leaving the router 14. The fully encrypted message 2' travels though the Internet and reaches the router 20 at the host's end. The router 20 performs a decryption of the fully encrypted message 2' to recover the message in its original ISO8583 format. The recovered message 2 is then sent to the host. In short, since the payment transaction message 2' travels through the Internet in a fully encrypted manner, security is enhanced.

However, in the security-enhanced Internet communication shown in Fig. 2, there exist still security flaws, as can be readily seen below.

Besides the POS terminal 10, other computing devices such as personal computers 22 and 24, may also be connected to the same LAN 12 on which the POS terminal resides. Often, at least some of these devices are not implemented with strict security measures. For example, the PC 24 may be connected to the Internet 16 via a third router 26, and thus may be under the attack of viruses from the Internet through router 26. As a result, data, in particular un-encrypted data, traveling on the LAN 12 is not secure. Specifically for the partially encrypted payment transaction message 2, the un-encrypted payment related information in the message 2, such as the card number 4, can be easily stolen by an eavesdropper via the flaw caused by the PC 24.

Consequently, there is need to provide a technology for POS terminal to securely conduct electronic payment transactions.

### Summary of the Invention

According to a first aspect of the invention, a POS terminal for performing, or processing, electronic payment transactions according to different payment software applications is provided. Usually, one payment software application is designed for a particular payment type, and a certain host is responsible for performing the payment software application in order to handle transactions of that payment type.
The POS terminal comprises a memory storing, or comprising, one or more host keys. A host key is a cryptographic key associated with a host. For example, the host key may be a public key of a public-key- private-key pair owned, or held, or possessed, by the host. Consequently, each host key stored in the POS terminal is associated with the payment software application that the host handles. As will be described in detail later, one purpose of the host keys is to establish secure connections between the POS terminal and corresponding hosts.

The POS terminal also comprises a processor for executing a set of instructions. The instructions, when executed, cause the POS terminal to perform a series of activities as listed below: Firstly, the POS terminal determines a payment software application. Then, the POS terminal selects the host key, from the host keys stored in its memory, associated with the determined payment software application. Next, the POS terminal generates a cryptographic key, which is to be used for establishing a secure connection, as to be seen below. (Although not a must, the cryptographic key can also be used, usually at a later stage, for the POS terminal and/or the host to encrypt messages transmitted there-between along the established secure connection). Thereafter, the POS terminal encrypts the cryptographic key with the selected host key. Finally, the POS terminal transmits the encrypted message including the encrypted cryptographic key to the host associated with the determined payment software application, to thereby establish a secure connection with the host.

The set of instructions executed by the processor may further cause the POS terminal to generate a payment transaction message according to an electronic payment transaction initiated by a user. The message may be generated to conform to the ISO8583 standard. Any other standard or protocol for formatting and/or encrypting electronic payment transaction messages may also be used. The POS terminal then encrypts the transaction message with either the cryptographic key generated above or another cryptographic key which is common to the POS terminal and the host.

Afterwards, the POS terminal transmits the encrypted transaction message to the host via the secure connection, which has been already established.

In one embodiment, the POS terminal can determine the payment software application according to an electronic payment transaction initiated by a user, a set of commands that the user inputs to the POS terminal, or a combination of the two.

The memory of the POS terminal may further store, or comprise, a certificate authority's (CA's) public key, of a public-key-private-key pair owned by a certificate authority (CA). The use of CA's public and private keys is beneficial for the distribution or delivery of host keys, e.g. updated or new host keys, to POS terminals, because it guarantees that the host keys come from a trusted source.

Specifically, prior to the delivery of a host key to a POS terminal, the host key is digitally signed, i.e. encrypted with the so-called "digital signature" technique, by the CA's private key. The digitally signed host key is then sent to the POS terminal, and the POS terminal endeavors to verify, i.e. decrypt, the received digitally signed host key by using the CA's public key in its own possession. If the verification is successful, the POS terminal can be sure that the host key comes from a trusted source and has not been tampered with. The verified, or decrypted, host key is then stored in the POS terminal's memory. Of course, different POS terminals may store different CA's public keys; alternatively, different POS terminals may store the public key of a same CA. Correspondingly, either different CA's private keys or a same CA's private key are/is used for the digitally signing the respective host keys.

To enhance security, the host key of an existing host (the term "existing host" means a host whose associated host key already exists in the memory of the POS terminal) may need update from time to time. This update means that, at the POS terminal, the existing, or "old", host key stored in the memory of the POS terminal should be replaced by the updated host key. To facilitate the replacement in a secure manner, the POS terminal is configured to accept, or receive, an updated host key digitally signed by a CA's private key and then verify it by using the CA's public key stored in the terminal memory. Upon successful verification of the digitally signed updated host key, meaning that the updated host key comes from a trusted source and has not been tampered with, the POS terminal obtains the updated host and stores it thereby replacing the old host key.

In addition to the update of existing host keys, the POS terminal may further be configured to accept new host keys from new hosts (the term "new host" indicates a host whose host key has never been stored in the memory of the POS terminal). Similarly to the host key update scenario, the POS terminal accepts a new host key, i.e. the host key associated with a new host, which is digitally signed with a CA's private key. Upon receiving the digitally signed new host key, the POS terminal tries to verify, i.e. decrypt, it by using the CA's public key in its own memory. If the verification is successful, meaning that the new host key comes from a trusted source and has not been tampered with, the POS terminal stores the new host key into the memory.

For a higher level of security, the CA's public key stored at the POS terminal may be updated from time to time. Accordingly, the POS terminal can be configured to perform this key update at the terminal's side.

For a further level of security, the POS terminal may further comprise a hardware security module (HSM). An HSM is a highly physically secure, tamper-resistant element that contains hardware and/or software components for performing cryptographic functionalities. For instance, the HSM may store cryptographic keys used for encrypting/decrypting messages originated from or received by the POS terminal. To perform message encryption/decryption and/or execute other cryptographic protocols or procedures, the HSM is equipped with processing means to carry out certain cryptographic algorithms. Since such hardware and/or software components are housed within the physically secure, tamper-resistant HSM, any means of stealing or manipulating the cryptographic information contained in the HSM is futile. For instance, the HSM can be adapted to immediately erase the cryptographic keys and/or the software applications contained therein whenever it detects a potential tampering of the HSM housing. These software applications enforce pre-determined procedures of payment application in order to prohibit any by-passing operations by users.

In particular, the processor and/or the memory of the POS terminal according to the present invention are arranged within the HSM. Thus, the multiple host keys and the CA's public key contained in the memory can be securely protected by the HSM. The processor, which comprises processing means for executing instructions, which, when executed, enable the POS terminal to perform a series of activities for processing electronic payment transactions, can also be safely guarded. Since at least some of these instructions are cryptographic procedures, protecting the processor effectively prevents these cryptographic procedures from being malevolently modified. To conclude, when the processor and/or the memory of the POS terminal are arranged within the HSM, anyone, even including the merchant or cardholder using the POS terminal, is not able to manipulate the cryptographic keys, protocols, or procedures used by the POS terminal. Thus, the POS terminal will always use the un-tampered cryptographic keys, follow the predetermined cryptographic procedures, and adhere to the designed cryptographic protocols.

For a further level of security, multiple host keys and/or the CA's public key may be stored, installed, or injected, into the memory of the POS terminal at the personalization phase of the HSM. A personalization phase is a step in POS terminal manufacturing that makes the POS terminal unique, i.e. enables the POS terminal to uniquely identify itself to hosts.

According to a further aspect of the invention, a method for a POS terminal to perform electronic payment transactions according to different payment software applications is provided. The POS terminal comprises multiple host keys for establishing secure connections with multiple hosts respectively. Each one of the host keys is associated with a payment software application, and further associated with the respective host that performs the payment software application. The method comprises the following steps: determining a payment software application; selecting the host key associated with the determined payment software application; generating a cryptographic key; encrypting the cryptographic key with the selected host key; establishing, by transmitting the encrypted cryptographic key to the host associated with the determined payment software application, a secure connection with the host.

### Brief description of the Drawings

In the following, the invention will be further described with reference to exemplary embodiments illustrated in the drawings, wherein:
- Fig. 1: shows a conventional electronic payment transaction message;
- Fig. 2: is a schematic diagram illustrating a secure processing of electronic payment transactions;
- Fig. 3A: is a block diagram illustrating a POS terminal according to the invention;
- Fig. 3B: is a block diagram illustrating another POS terminal according to the invention;
- Fig. 4: is a schematic diagram illustrating a secure processing of electronic payment transactions according to the invention;
- Fig. 5: is a flow chart illustrating a method embodiment of the invention.

### Detailed description of the Drawings

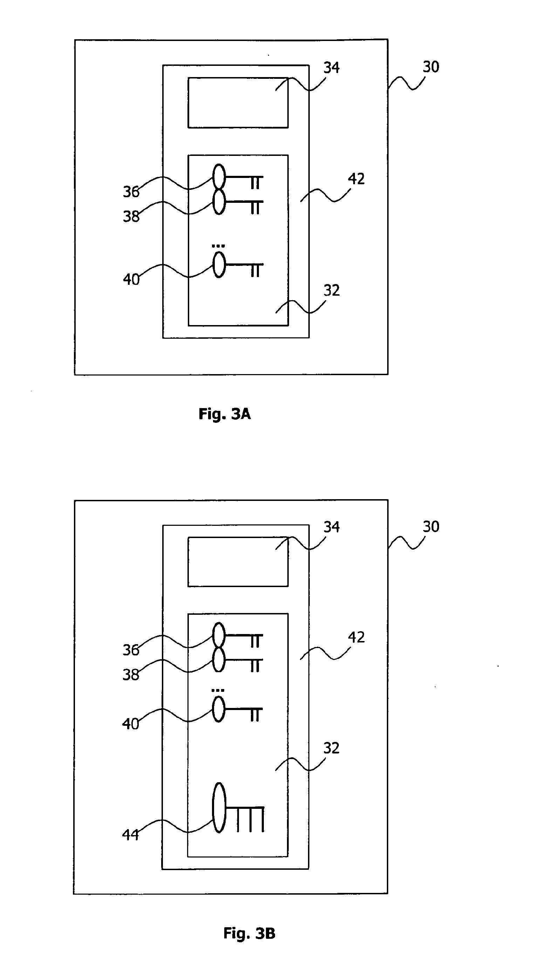

Referring to Fig. 3A, a POS terminal 30 for performing electronic payment transactions according to different payment software applications is illustratively shown as to comprise a memory 32 and a processor 34. The memory 32 comprises, or stores, or contains, one or more host keys 36, 38, ..., 40, which are used for the POS terminal to establish secure connections with multiple hosts. A host key, 36 for example, is a cryptographic key associated with a host. The host key may be generated by the host or by a CA and/or distributed by the host or by the CA to one or more POS terminals. For example, the host key 36 is a host public key of an asymmetric key pair associated with the host, the asymmetric key pair being a pair of host public key and host private key. In other words, the host holds the host private key while the terminal has the corresponding host public key.

Since a certain host is responsible for performing a certain payment software application in order to handle payment transactions of a payment type, each host key stored in the POS terminal is associated with the payment software application that the corresponding host handles. Normally, the POS terminal comprises functionalities that perform the different payment software applications at the terminal side. The host keys 36, 38, ..., 40 may be stored into the memory 32 prior to the first usage of the POS terminal 30. For instance, the POS terminal may undergo a so-called "personalization phase" before it is used by a user for the first time. At the personalization phase, host keys, and perhaps other cryptographic information, are installed into the memory. The memory may be a RAM, SRAM, and the like.

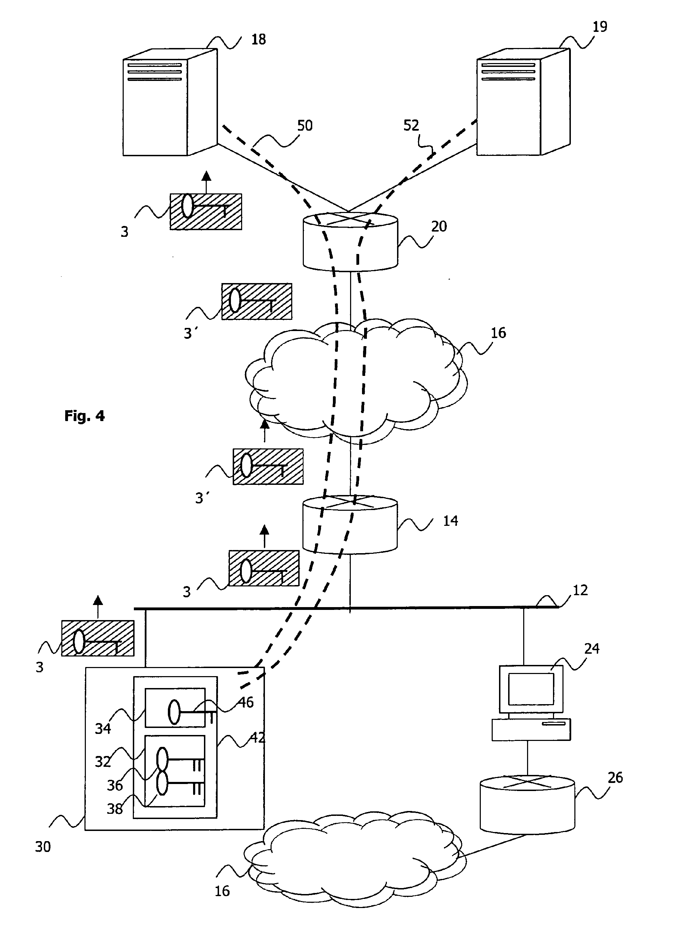

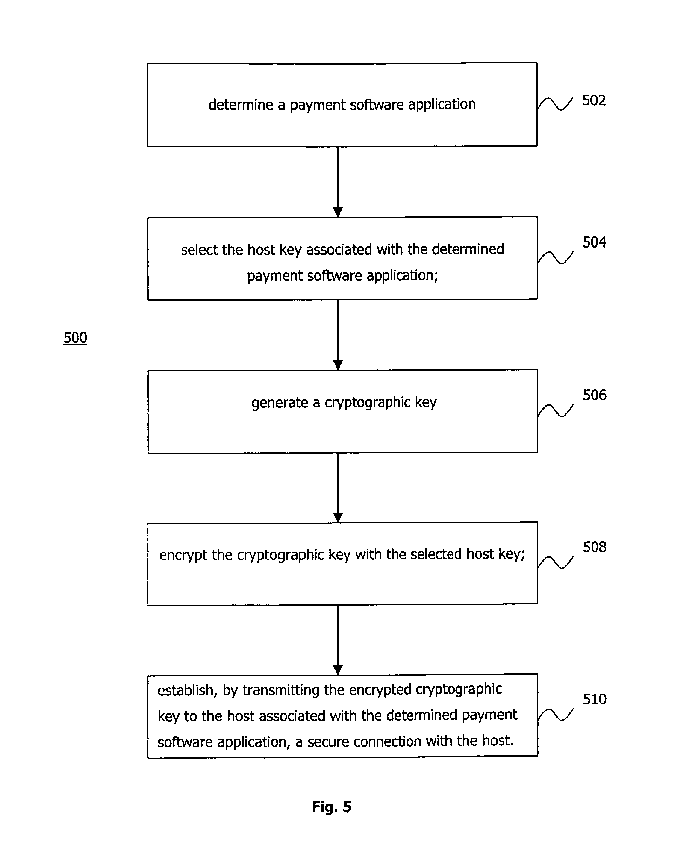

The processor 34 can execute a set of instructions that enables the POS terminal 30 to perform electronic payment transactions. The set of instructions may be hardware-coded or software-coded. The instructions may reside on any component of the POS terminal 30; preferably, they reside either on the processor 34 or in the memory 32. Once the processor 34 executes the instructions, the POS terminal accordingly performs a series of functions, mainly for the purpose of processing electronic payment transactions. Such processing will be described below in more detail with reference to Figs. 4 and 5.

Referring to Fig. 3B, the POS terminal 30 may further comprise another key 44 in the memory 32. The key 44 is a certification key, such as a CA's public key of a public-key-private-key pair owned by a certificate authority (CA). As already described, since the use of a CA's public and private keys can guarantee that the host keys come from trusted sources, the CA's public key 44 is especially useful for the POS terminal when an existing host key 36, 38, ... 40 stored in the memory 32 thereof needs to be replaced, or updated, or renewed, or changed. Likewise, the CA's public key 44 is also useful when the POS terminal 30 needs to establish a secure connection with a new host whose host key does not exist in the memory 32. Below, the replacement of an existing host key and the acquisition of a new host key at the terminal's side are explained in detail.

For an enhanced level of security, a host key usually needs to be updated from time to time. (In the case of asymmetric key pair, both the host public key and the host private key are updated, although only the updated host public key is sent to POS terminals.) Accordingly, one (or more) POS terminal with which the host has had payment transactions replaces the existing, or "old", host key (stored in the memory) with the updated host key. In one embodiment, the updated host key is digitally signed by a CA's private key and then sent to the POS terminal. The POS terminal verifies the received digitally signed updated host key by using the CA's public key 44. Upon successful verification, which indicates that the updated host key comes from a trusted source and has not been tampered with, the POS terminal obtains the updated host key and stores it in the memory, thus to replace the corresponding "old" host key.

The acquisition of a new host key (from a new host with which a POS terminal has never had payment transactions before) by the POS terminal is similar to the host-key replacement scenario above. From the technical point of view, a new host means a host whose associated host key does not exist in the memory of the POS terminal. From the business point of view, a new host is payment service center that a merchant has not been able to use before. Thus, when the merchant wishes to use the service of a new host, it is necessary for the POS terminal to obtain the host key associated with this new host, so that secure connections with this new host can be established. One way for the POS terminal to obtain the new host key is as below: the new host key is digitally signed by a CA's private key. The digitally signed new host key is sent the POS terminal, e.g. through a communication channel. The POS terminal then verifies the received digitally signed new host key by using the CA's public key 44 stored in its own memory. Upon successful verification, which indicates that the new host key comes from a trusted source and has not been tampered with, the POS terminal obtains the new host key and stores it into the memory. Afterwards, knowing the host key of the new host, the POS terminal is able to establish secure connections with a new host in order to perform electronic payment transactions with that new host in a secure manner.

Referring to both Fig. 3A and Fig. 3B, for a further level of security, the POS terminal 30 may comprise a hardware security module (HSM) 42. The processor 34 and/or the memory 32 of the POS terminal may be arranged inside the HSM 42. Since any form (physical, electrical, magnetic, etc.) of tampering the HSM is almost futile, the information contained in the processor and the memory, especially the host keys 36, 38, ... , 40 and the CA's public key 44 stored in the memory 32, as well as the associated cryptographic procedure codes, is well protected. The processor, which comprises processing means for executing predefined cryptographic protocols or procedures, is also safely guarded. For yet a further level of security, the host keys 36, 38, ... , 40 and/or the CA's public key 44 may be stored, or installed, or injected, into the memory 32 of the POS terminal 30 at the personalization phase of the HSM 44.

Next, a secure processing of electronic payment transactions according to the invention will be described in detail with reference to Fig. 4.

As seen from in Fig. 4, the hardware involved in the processing, i.e. the devices and their interconnections and the communication network are basically the same as that shown in Fig. 2. Different is that the POS terminal is now a new POS terminal 30 according to the invention. Further different is the existence of a second host 19, which processes a payment software application different from that of the host 18. For example, the host 18 may be responsible for Visa card payments while the host 19 for Mastercard payments. As illustratively shown in the Fig. 4, the POS terminal 30 can communicate with either the host 18 or the host 19. This means the POS terminal 30 can perform electronic payment transactions according to different payment software applications.

In the memory 32 of the POS terminal, two host keys 36 and 38 are stored and are associated with the hosts 18 and 19, respectively. The processor 34 of the POS terminal 30 runs a set of instructions that enables the POS terminal to perform a series of activities for processing electronic payment transactions.

The activities start with the POS terminal's determining a payment software application. Particularly, the POS terminal may determine the application according to some command issued from a user, usually a merchant or a cardholder. For instance, the user may key-in, on a keyboard of the POS terminal, a series of command codes to instruct the POS terminal to establish a secure connection with a certain host, host 18 for example, which handles a certain payment software application. According to the user command, the POS terminal is able to determine the payment software application associated with this very host 18. Alternatively, the POS terminal may determine a payment software application according to an electronic payment transaction initiated by the user. For instance, when the user swipes a payment card through the card-reading slot of the POS terminal, and sometimes followed by the user's keying-in of additional information related to the transaction (e.g. information regarding the payment amount, the payment type, etc.) the POS terminal is able to determine which payment software application will be executed to complete the payment transaction.

Suppose that the POS terminal is commanded by the user to establish a secure connection to the host 18 that handles Visa card payments. Having determined the payment software application thereby knowing that the host 18 is the intended host, the POS terminal 30 then selects, from the multiple host keys stored in the memory 32, the host key, 36, that is associated with the host 18. Next, the POS terminal 30 generates a cryptographic key 46 for the purpose of establishing a secure connection 50 with the host 18. One example of such secure connection is a terminal-host session such as a Secure Sockets Layer (SSL) session. SSL is a cryptographic protocol that provides secure communications on the Internet for activities such as data transfer. Obviously, any other suitable secure connection protocol for Internet communication may be established. For enhanced security, the cryptographic key 46 is preferably unique in the sense that it is used for the establishment of only one secure connection. This means that, if the POS terminal wishes to set up another secure connection after a first secure connection is released, a new cryptographic key will have to be generated; this is true even when the secure connections are with the same host. In the case of SSL, an SSL session key is unique for a single SSL session.

The detailed procedure of the establishment of the secure connection 50 with the host 18 is as below: having generated the cryptographic key 46, the POS terminal 30 encrypts the cryptographic key 46 with the selected host key 36 which is associated with the host 18. Alternatively, the POS terminal may generate a connection request message containing the cryptographic key 46 and then encrypt the connection request message with the selected host key 36. In either case, the cryptographic key 46 is encrypted with the selected host key 36. Thereafter, the POS terminal transmits the encrypted cryptographic key (or the encrypted connection request message containing the cryptographic key) to the host 18 in order to establish a secure connection. When the host receives the cryptographic key 46 encrypted with the host key 36, which the host knows, the host performs decryption to obtain the cryptographic key 46. (For example, in the asymmetric host-public-key - host-private key-scenario, the cryptographic key 46 is encrypted by the POS terminal with the host public key 36; the host 18, owning the corresponding host private key, will be able to perform the decryption to obtain the cryptographic key 46). Since, apart from the POS terminal, only the intended host 18 knows about the host key 36, no third party is able to decrypt thus obtain the cryptographic key 46. After successfully acquiring the cryptographic key 46 from the POS terminal 30, the host returns a connection response message to the POS terminal to indicate that a secure connection is ready for use. Since, starting from this time point, both the host 18 and the POS terminal 30 share the same cryptographic key 46, either party can encrypt a message, such as a payment transaction message, with this cryptographic key 46, transmits the encrypted message to the other party, and the other party can decrypt the encrypted message by using the same cryptographic key 46. In summary, by means of this cryptographic key 46 and the encryption/decryption with the host key 36, the connection 36 established is truly secure.

After the secure connection 50 is set up, the POS terminal 30 and the host 18 may subsequently communicate with each other regarding electronic payment transactions. For example, the POS terminal can generate a payment transaction message 3 fully encrypted with the cryptographic key 46, transmits the encrypted message 3' to the host 18 along the secure connection 50. The host, having known the cryptographic key 46, can decrypt the encrypted message 3' and then continues with further processing. Alternatively, since the POS terminal and the host are already on a secure connection, they may choose a different symmetric cryptographic key or even an asymmetric key pair for this subsequent communication. In principle, any encryption-decryption technique suitable for two-party communication may be used.

Importantly, since the payment transaction message 3 is fully encrypted by the POS terminal - more specifically at the processor 34 or at the HSM 42 - the partial encryption problem in the conventional practice is solved. Even if the PC 24 remains a security weak-point, it is not possible for an eavesdropper to steal any payment-related information by attacking the PC 24.

As shown in Fig. 4, the POS terminal 30 is capable of establishing a secure connection 52 with the second host 19 and processing the type of electronic payment transactions that the host 19 handles. The procedures are mainly the same as those with the host 18.

Next, an embodiment of a method 500 for a POS terminal for performing electronic payment transactions will be described in detail with reference to Fig. 5. In order to provide a more thorough understanding, the method 500 will be exemplary described in relation to the POS terminal of Figs. 3A and 3B. Reference will also be made to the block diagram of Fig. 4. However, it should be noted that the method 500 can also be practiced in combination with a POS terminal having a different configuration and/or a POS terminal - host environment having a different arrangement.

The method begins with step 502, where the POS terminal 30 determines a payment software application. Next, at step 504, the POS terminal 30 selects the host key 36 (from all the host keys 36, 38, ... 40 stored in the memory 32) associated with the determined software application. At step 506, the POS terminal 30 generates a cryptographic key 46, such as a session key, e.g. an SSL session key, or any other cryptographic key for the purpose of encrypting/decrypting messages between the POS terminal 30 and the host 18. At step 508, the POS terminal 30 encrypts the cryptographic key 46 with the selected host key 36. Finally, at step 510, the POS terminal 30 transmits the encrypted cryptographic key to the host 18 associated with the determined payment software application thereby establishing a secure connection 50 with the host 18.

Although embodiments of the invention have been illustrated in the accompanying drawings and described in the foregoing description, it should be understood that the invention is not limited to the embodiments disclosed herein. In particular, the invention is capable of numerous rearrangements, modifications and substitutions. For example, although the description has been made with reference to the Internet communication scenario only, the invention can apply to other public telecommunication networks and even private telecommunication networks so as to enhance the security of electronic payment transaction over these networks.

## Claims

1. A Point-of-Sale (POS) terminal for performing electronic payment transactions according to different payment software applications, said POS terminal comprising:
a memory comprising multiple host keys for establishing secure connections with multiple hosts respectively, each host key associated with a payment software application, each host key associated with a host for handling the payment software application, and
a processor for executing a set of instructions which, when executed, causes the POS terminal to
- determine a payment software application;
- select the host key associated with the determined payment software application;
- generate a cryptographic key;
- encrypt the cryptographic key with the selected host key; and
- establish, by transmitting the encrypted cryptographic key to the host associated with the determined payment software application, a secure connection with the host.

2. The POS terminal of claim 1, wherein the set of instructions, when executed by the processor, further causes the POS terminal to
- generate a transaction message according to an electronic payment transaction initiated by a user;
- encrypt the transaction message with the cryptographic key or another cryptographic key common to the POS terminal and the host; and
- transmit the encrypted transaction message to the host via the secure connection.

3. The POS terminal of any of the preceding claims, wherein the set of instructions, when executed by the processor, causes the POS terminal to
- determine the payment software application according to an electronic payment transaction initiated by a user and/or a set of user commands input to the POS terminal.

4. The POS terminal of any of the preceding claims, wherein the memory further comprises a certificate authority's (CA's) public key of a public key-private key pair owned by a CA.

5. The POS terminal of claim 4, wherein the set of instructions, when executed by the processor, further causes the POS terminal to
- accept an updated host key digitally signed with the CA's private key;
- verify the digitally signed updated host key by means of the CA's public key in the memory; and
- if the verification is successful, replace the host key in the memory associated with the existing host with the verified updated host key.

6. The POS terminal of claim 4 or claim 5, wherein the set of instructions, when executed by the processor, further causes the POS terminal to
- accept a new host key digitally signed with the CA's private key key;
- verify the digitally signed new host key by means of the CA's public key in the memory; and
- if the verification is successful, store the verified new host key in the memory.

7. The POS terminal of any of claims 4 to 6, wherein the set of instructions, when executed by the processor, further causes the POS terminal to update the CA's public key stored in the memory.

8. The POS terminal of any of the preceding claims, wherein the POS terminal further comprises a hardware security module, said hardware security module comprising the processor and/or the memory.

9. The POS terminal of claim 8, wherein the POS terminal is adapted to store multiple host keys and/or a CA's public key into the memory at a personalization phase of the hardware security module.

10. A method for a POS terminal for performing electronic payment transactions according to different payment software applications; said POS terminal storing multiple host keys for establishing secure connections with multiple hosts respectively, each host key associated with a payment software application, each host key associated with a host for handling the payment software application; the method comprises the following steps:
- determining a payment software application;
- selecting the host key associated with the determined payment software application;
- generating a cryptographic key;
- encrypting the cryptographic key with the selected host key; and
- establishing, by transmitting the encrypted cryptographic key to the host associated with the determined payment software application, a secure connection with the host.
